# EUROPÄISCHE PATENTSCHRIFT

(11) **EP 3 414 160 B1**
(45) Veröffentlichungstag und Bekanntmachung des Hinweises auf die Patenterteilung: **04.12.2019**
(21) Anmeldenummer: 17703980.7
(22) Anmeldetag: 08.02.2017
(51) Int. Cl.: B64D 11/00, B64D 11/02, B64D 11/04, F24H 1/00, F16K 24/04

(54) **ENTLÜFTUNGSAUSLASS, WANDELEMENT MIT DEMSELBEN UND SPÜLVERFAHREN MIT VERWENDUNG DESSELBEN**
VENTING OUTLET, WALL ELEMENT WITH SUCH AN OUTLET AND CLEANING METHOD USING THE SAME
SORTIE DE VENTILATION, ÉLÉMENT DE PAROI AVEC LE MÊME ET PROCÉDÉ DE RINÇAGE AVEC L'UTILISATION DE CELUI-CI

(30) Priorität: 09.02.2016 US 201662293168 P
(43) Veröffentlichungstag der Anmeldung: 19.12.2018
(73) Patentinhaber: Safran Cabin Germany GmbH, 35745 Herborn (DE)
(72) Erfinder: METZ, Marcel, 35745 Herborn (DE)
(74) Vertreter: Grosse, Wolf-Dietrich Rüdiger
(86) Internationale Anmeldenummer: PCT/EP2017/052681
(87) Internationale Veröffentlichungsnummer: WO 2017/137407

(56) Entgegenhaltungen:
- US-A- 5 322 099
- US-A1- 2011 083 771
- US-A1- 2013 269 796

## Beschreibung

Die vorliegende Erfindung betrifft einen Entlüftungsauslass für ein Trinkwasserversorgungssystem eines Luftfahrzeugs nach Gattung des unabhängigen Anspruchs 1. Ferner betrifft die Erfindung ein Wandelement für eine Bordküche mit einem Entlüftungsauslass nach Gattung des unabhängigen Anspruchs 1. Die Erfindung betrifft auch ein Verfahren zum Spülen eines Trinkwasserversorgungssystems eines Luftfahrzeugs nach Gattung des unabhängigen Anspruchs 14.

### Stand der Technik

Heutige Luftfahrzeuge, insbesondere Flugzeuge, sind mit einem Trinkwasserversorgungssystem ausgestattet, wie z.B. in Dokument US2013/0269796 gezeigt wurde. Das Trinkwasserversorgungssystem umfasst einen Trinkwasserspeicher mit daran angeschlossenen Trinkwasser-Versorgungsleitungen, über welche Trinkwasser zu Verbrauchsstellen befördert werden kann. Die Verbrauchsstellen sind insbesondere in einer Bordküche, auch Galley genannt, des Luftfahrzeugs angeordnet. Eine derartige Verbrauchsstelle ist beispielsweise ein Trinkwasser-Zapfhahn, über den Kabinenbesatzungspersonal Trinkwasser beziehen kann. Eine derartige Verbrauchsstelle kann ferner eine Vorrichtung zum Zubereiten von Speisen und/oder Getränken sein, wie beispielsweise ein Dampfofen, dem Trinkwasser zur internen Dampferzeugung über eine Trinkwasser-Versorgungsleitung des Trinkwasserversorgungssystems zugeführt werden kann, oder ein Getränkezubereitungsapparat.

Damit das Trinkwasser durch die Trinkwasser-Versorgungsleitungen innerhalb eines vorgegebenen Druckbereichs bereitgestellt werden kann, umfasst das Trinkwasserversorgungssystem mindestens ein Entlüftungsventil, über das insbesondere beim Befüllen des Trinkwasserversorgungssystems eingebrachte, überschüssige Luft aus dem Trinkwasserversorgungssystem abgeführt werden kann. Das mindestens eine Entlüftungsventil ist eingangsseitig an eine Trinkwasser-Versorgungsleitung angeschlossen. Ausgangsseitig ist das mindestens eine Entlüftungsventil an eine Entlüftungsleitung angeschlossen. Wenn mehrere Entlüftungsventile in dem Trinkwasserversorgungssystem vorgesehen sind, können diese ausgangsseitig an eine Hauptentlüftungsleitung angeschlossen sein. Das ausgangsseitige Ende einer derartigen Entlüftungsleitung bzw. Hauptentlüftungsleitung ist ein Entlüftungsauslass mit einer Entlüftungsöffnung zum Ausgeben der aus dem Trinkwasserversorgungssystem abzuführenden Luft an die äußere Umgebung des Trinkwasserversorgungssystems, also den Innenraum des Luftfahrzeugs. Dieser Entlüftungsauslass ist heutzutage häufig als offenes Schlauchende ausgestaltet, das in einem zur Aufnahme von Trolleys ausgebildeten Schrankfach bzw. Compartment, häufig in einer Bodenwanne eines Trolleys, verborgen angeordnet ist.

Im Normalfall wird über die Entlüftungsleitung bzw. Hauptentlüftungsleitung nur überschüssige Luft aus dem Trinkwasserversorgungssystem als Entlüftungsfluid abgeführt und tritt aus dem Entlüftungsauslass aus. Im Fall eines defekten Entlüftungsventils kann aber auch Wasser zusammen mit Luft als Entlüftungsfluid aus dem Entlüftungsauslass austreten.

Das Trinkwasserversorgungssystem muss regelmäßig gereinigt und desinfiziert werden. Zu diesem Zweck wird das gesamte Trinkwasserversorgungssystem bis einschließlich zu den Verbrauchsstellen mit einem Reinigungs- und Desinfektionsfluid geflutet. Vor der anschließenden erneuten bestimmungsgemäßen Verwendung des Trinkwasserversorgungssystems muss das gesamte Trinkwasserversorgungssystem zunächst mehrfach mit Trinkwasser gespült werden, um sicherzustellen, dass kein Reinigungs- und Desinfektionsfluid im Trinkwasserversorgungssystem verblieben ist.

Als besonders aufwändig hat sich dabei die gründliche Spülung der Entlüftungsventile herausgestellt. Zum Durchführen der Spülung werden heutzutage die Entlüftungsventile über die Trinkwasser-Versorgungsleitungen des Trinkwasserversorgungssystems mit Trinkwasser versorgt.

Die oben beschriebenen, heutzutage in Luftfahrzeugen für die Trinkwasserversorgung eingesetzten Systeme erfordern einen hohen Reinigungs- und Spülaufwand und können im Fall eines defekten Entlüftungsventils die Betriebssicherheit des Luftfahrzeugs beeinträchtigen.

### Offenbarung der Erfindung

Der vorliegenden Erfindung liegt daher die Aufgabe zugrunde, eine technische Lösung für ein Trinkwasserversorgungssystem eines Luftfahrzeugs bereitzustellen, die den zum Spülen des Trinkwasserversorgungssystems einschließlich dessen Entlüftungsventil erforderlichen Aufwand reduziert und bevorzugt zugleich die Betriebssicherheit des Trinkwasserversorgungssystems im Fall eines Defekts eines Entlüftungsventils erhöht.

Die Aufgabe der vorliegenden Erfindung wird durch einen unten vorgestellten Entlüftungsauslass für ein Trinkwasserversorgungssystem eines Luftfahrzeugs gelöst. Auf einer Rückseite des Entlüftungsauslasses ist eine Einlassöffnung zum Empfangen eines Entlüftungsfluids von dem Trinkwasserversorgungssystem angeordnet. Die Einlassöffnung bildet den eingangsseitigen Abschluss eines Einlassabschnitts, der zur Kopplung des Entlüftungsauslasses mit einer Entlüftungsleitung bzw. Hauptentlüftungsleitung des Trinkwasserversorgungssystems ausgebildet ist. Auf einer von der Rückseite abgewandten Vorderseite des Entlüftungsauslasses ist eine Entlüftungsöffnung zum Ausgeben zumindest eines Teils des empfangenen Entlüftungsfluids an eine äußere Umgebung des Entlüftungsauslasses angeordnet.

Der Erfindung liegt nun die erfinderseitige Erkenntnis zugrunde, dass der Spülungsvorgang erheblich beschleunigt werden kann, wenn in heutzutage in Luftfahrzeugen genutzten Trinkwasserversorgungssystemen, die mit mindestens einem Entlüftungsventil versehen sind, das mindestens eine Entlüftungsventil in einem Reinigungs- und Spülbetrieb des Trinkwasserversorgungssystems von der Seite der Entlüftungsöffnung mit einem Spülfluid, insbesondere Trinkwasser, beliefert wird, also entgegen der für das Abführen des Entlüftungsfluids (in einem normalen Betrieb des Trinkwasserversorgungssystems) vorgesehenen Entlüftungsströmungsrichtung.

Zum Einbringen des Spülfluids umfasst der vorgestellte Entlüftungsauslass ferner einen Spülanschluss. Der Spülanschluss ist mit der Einlassöffnung im Sinne eines Strömungskanals derart gekoppelt, dass ein an dem Spülanschluss zugeführtes Spülfluid zu der Einlassöffnung beförderbar ist und aus dieser austritt. Beispielsweise ist die Einlassöffnung an einem Einlassrohrabschnitt des Spülanschlusses bereitgestellt, wobei der Einlassrohrabschnitt in einen den Spülanschluss ausbildenden Spülrohrabschnitt übergeht. Dieser Übergang kann in der Richtung von dem Spülrohrabschnitt zum Einlassrohrabschnitt mit oder ohne eine Verjüngung oder Aufweitung ausgestaltet sein.

Zudem weist der vorgestellte Entlüftungsauslass eine Abdeckung auf, die an dem Spülanschluss anbringbar und von diesem abnehmbar ist. Die Abdeckung ist mit mindestens einem Durchgangsloch versehen. Das mindestens eine Durchgangsloch bildet nur dann die Entlüftungsöffnung des Entlüftungsauslasses, falls die Abdeckung an dem Spülanschluss angebracht ist. Bevorzugt ist die Abdeckung nicht nur mit einem Duchgangsloch, sondern mit einer die Entlüftungsöffnung ausbildenden Mehrzahl von Durchgangslöchern versehen. Das oder die Durchgangslöcher sind für einen Durchtritt des Entlüftungsfluids durch die Abdeckung ausgebildet und ermöglichen einen Durchtritt des Entlüftungsfluids durch die Entlüftungsöffnung auf die Vorderseite des Entlüftungsauslasses.

Der Spülanschluss ist nur bei von dem Spülanschluss abgenommener Abdeckung ausgebildet zum Ankoppeln einer Spülfluidleitung auf der Vorderseite des Entlüftungsauslasses und zum Einbringen des Spülfluids durch den Spülanschluss zu der Einlassöffnung des Entlüftungsauslasses. Wenn die Abdeckung an der Spülvorrichtung angebracht ist, ist der Spülanschluss nicht mit einer Spülfluidleitung zum Einbringen des Spülfluids in den Spülanschluss koppelbar. Unter dem Begriff der an dem Spülanschluss angebrachten Abdeckung wird somit verstanden, dass die Abdeckung sich in einem Montagezustand befindet, in dem die Nutzung des Spülanschlusses mit einem Ankoppeln einer Spülfluidleitung an diesen nicht möglich ist. Das Anbringen der Abdeckung an dem Spülanschluss kann durch ein Anbringen der Abdeckung auf einem äußeren Abschnitt des Spülanschlusses, wie beispielsweise durch ein Aufschieben oder Aufdrehen der Abdeckung auf den Spülanschluss erfolgen. Optional oder alternativ kann das Anbringen der Abdeckung an dem Spülanschluss ein Anbringen der Abdeckung an einem innenliegenden Abschnitt des Spülanschlusses, wie beispielsweise durch ein Einbringen, Einschieben, Einstecken oder Einstöpseln der Abdeckung in den Spülanschluss, umfassen. Die Abdeckung und der Spülanschluss des vorgestellten Entlüftungsauslasses sind entsprechend für einen oben angeführten wechselseitigen mechanischen Kontakt miteinander ausgebildet.

Damit das Entlüftungsfluid von der Einlassöffnung entlang der Entlüftungsströmungsrichtung zu der Entlüftungsöffnung strömen kann, ist in dem vorgestellten Entlüftungsauslass ein Entlüftungsströmungskanal ausgebildet. Damit das Spülfluid von dem Spülanschluss entlang einer zu der Entlüftungsströmungsrichtung entgegengesetzten Spülströmungsrichtung zu der Einlassöffnung strömen kann, ist in dem vorgestellten Entlüftungsauslass ein Spülströmungskanal ausgebildet. Der Entlüftungsströmungskanal und der Spülströmungskanal sind bevorzugt - abgesehen von der nur für den Entlüftungsströmungskanal vorgesehenen Entlüftungsöffnung - durch einen gemeinsamen, bevorzugt identischen, Strömungskanal ausgebildet.

Der vorgestellte Entlüftungsauslass ermöglicht bei von dem Spülanschluss abgenommener Abdeckung an seiner Vorderseite ein einfaches Ankoppeln einer Spülfluidleitung an ein zu spülendes Trinkwasserversorgungssystem eines Luftfahrzeugs. Aus der an den Spülanschluss des Entlüftungsauslasses angekoppelten bzw. angeschlossenen Spülfluidleitung kann durch den Spülanschluss Spülfluid zu der Einlassöffnung befördert werden, um ferner entgegen der für das Abführen eines Entlüftungsfluids vorgesehenen Entlüftungsströmungsrichtung zu mindestens einem Entlüftungsventil des Trinkwasserversorgungssystems befördert zu werden. Somit ermöglicht der vorgestellte Entlüftungsauslass eine einfache und schnelle Spülung des Trinkwasserversorgungssystems.

Wenn der vorgestellte Entlüftungsauslass nicht zum Spülen sondern zum regulären Entlüften konfiguriert ist, nämlich durch die auf dem Spülanschluss angebrachte Abdeckung, kann im Falle eines Defekts eines mit dem Entlüftungsauslass über eine Entlüftungsleitung bzw. Hauptentlüftungsleitung gekoppelten Entlüftungsventils eine in dem Entlüftungsfluid enthaltene Flüssigkeit, insbesondere (ehemaliges) Trinkwasser, aus der Vorderseite des Entlüftungsauslasses, konkret durch das mindestens eine Durchgangsloch der an einer dedizierten Position angebrachten Abdeckung, austreten. Dadurch wird ein einfaches Detektieren eines Defekts mindestens eines Entlüftungsventils des Trinkwasserversorgungssystems ermöglicht, so dass die Betriebssicherheit des Trinkwasserversorgungssystems erhöht wird.

In einer Weiterbildung des vorgestellten Entlüftungsauslasses ist vorgesehen, dass die an dem Spülanschluss angebrachte Abdeckung einen für eine Ankopplung der Spülfluidleitung vorgesehenen Abschnitt des Spülanschlusses zumindest teilweise bedeckt. Dadurch wird effektiv verhindert, dass eine Spülfluidleitung während des normalen Betriebs des Trinkwasserversorgungssystems, also außerhalb des Reinigungs- und Spülbetriebs, an den Spülanschluss angeschlossen werden kann. Dies erhöht die Betriebssicherheit des Trinkwasserversorgungssystems.

In einer Weiterbildung des vorgestellten Entlüftungsauslasses ist vorgesehen, dass die Abdeckung als perforierte Kappe ausgestaltet ist. Die Kappe ist mit dem mindestens einen Durchgangsloch, bevorzugt einer Mehrzahl von Durchgangslöchern, perforiert. Bevorzugt hat jedes Durchgangsloch eine maximale, bevorzugt einheitliche, Durchgangsbreite bzw. einen maximalen Durchmesser von 0,8 Millimeter. Die Kappe ist bevorzugt zum Anbringen auf einem äußeren Abschnitt des Spülanschluss ausgebildet, beispielsweise zum Aufschieben, Drehen und/oder Aufstülpen der Kappe auf den Spülanschluss, so dass ein mechanischer Kontakt zwischen einem innenliegenden Abschnitt der Kappe, der beispielsweise als ein Innengewinde oder ein in der Kappe aufgenommener Dichtring ausgestaltet ist, und dem äußeren Abschnitt des Spülanschlusses, der beispielweise als eine Erhöhung oder Querschnittsverdickung ausgebildet ist, bewirkt wird. Durch die gute Erreichbarkeit dieser Abdeckung wird ein einfaches manuelles Anbringen und Abnehmen der Abdichtung von dem Spülanschluss ermöglicht, so dass das Trinkwasserversorgungssystem schnell gespült werden kann. Die Abdeckung ist bevorzugt nur durch Lösen bzw. Entriegeln einer an der Abdeckung und/der dem Spülanschluss vorgesehenen Arretierung von dem Spülanschluss abnehmbar. Bevorzugt ist die Arretierung nur durch Verwendung eines spezifischen Werkzeugs lösbar bzw. entriegelbar. Dadurch wird sichergestellt, dass nur Wartungspersonal den Entlüftungsauslass in die Konfiguration für den Reinigungs- und Spülbetrieb bringen kann. Beim Anblick der als Kappe ausgebildeten Abdeckung erschließt sich für Wartungspersonal des Trinkwasserversorgungssystems schnell und eindeutig, wie der Spülanschluss zum Ankoppeln einer Spülfluidleitung nutzbar gemacht werden kann.

Ferner ist in einer Weiterbildung des vorgestellten Entlüftungsauslasses vorgesehen, dass das mindestens eine Durchgangsloch der Abdeckung eine maximale Durchgangsbreite bzw. maximalen Durchmesser von 0,8 Millimeter aufweist. Bei einer Ausgestaltung der Abdeckung mit mehreren Durchgangslöchern, die die Entlüftungsöffnung bilden, weisen bevorzugt alle diese Durchgangslöcher höchstens die oben aufgeführten maximalen Durchgangsbreiten bzw. Durchmesser auf. Bevorzugt sind alle Durchgangslöcher identisch ausgestaltet. Durch die Beschränkung der maximalen Durchgangsbreite bzw. des Durchmessers wird sichergestellt, dass die Entlüftungsöffnung so hygienisch und verschmutzungsfrei ausgestaltet ist, dass durch den vorgestellten Entlüftungsauslass kein Dreck, Insekten oder Krankheitserreger in das Trinkwasserversorgungssystem eindringen können. Somit können Hygienevorgaben, wie beispielseise die der FDA (Food and Drug Administration), eingehalten werden.

In einer Weiterbildung des vorgestellten Entlüftungsauslasses ist vorgesehen, dass die Abdeckung und/oder der Spülanschluss eine Sicherungseinheit gegen ein unbeabsichtigtes Entfernen der an dem Spülanschluss angebrachten Abdeckung von dem Spülanschluss aufweist. Der Begriff des unbeabsichtigten Entfernens umfasst ein unbeabsichtigtes Abnehmen der Abdeckung durch Personal, beispielsweise durch einfaches Berühren der Abdeckung, und ein Lösen der Abdeckung von dem Spülanschluss ohne direkte Einwirkung einer Person, beispielsweise durch das durch die Abdeckung strömende Entlüftungsfluid oder durch Vibrationen im Luftfahrtbetrieb.

In einer Weiterbildung des vorgestellten Entlüftungsauslasses ist vorgesehen, dass der Spülanschluss eine Befestigungseinheit zum Ankoppeln der Spülfluidleitung durch einen Schnellverschluss und/oder einen Schraubverschluss aufweist. Ohne Beschränkung darauf kann die Befestigungseinheit bzw. der Spülanschluss gemäß der Norm ABS1169 des Flugzeugherstellers Airbus ausgestaltet sein. Die Befestigungseinheit ist ausgebildet zum Bereitstellen eines Formschlusses, in Verwendung mit einer an den Spülanschluss angekoppelten Spülfluidleitung, zwischen dem Spülanschluss und der Spülfluidleitung gegen ein eigenständiges Lösen der Spülfluidleitung von dem Spülanschluss. Bevorzugt ist die Befestigungseinheit als ein Abschnitt des Spülanschlusses mit einer lokalen Querschnittvergrößerung oder eine Vertiefungsnut ausgestaltet. Die zur Verwendung mit einem derartig ausgebildeten Spülanschluss ausgebildete Spülfluidleitung weist dann beispielsweise an ihrem für die Kopplung mit dem Spülanschluss vorgesehenen Ende eine durch eine Federkraft ausgelenkte Arretierung auf, die durch Aufbringen einer Gegenkraft auf diese, beispielsweise durch Verschieben eines Rings, eines Hebels oder einer Raste, temporär gelöst werden kann, um die Spülfluidleitung von dem Spülanschluss zu lösen.

In einer Fortbildung dieser Weiterbildung des vorgestellten Entlüftungsauslasses kann vorgesehen sein, dass die Befestigungseinheit auch als die oben bereits erwähnte Sicherungseinheit gegen ein unbeabsichtigtes Entfernen der an dem Spülanschluss angebrachten Abdeckung von dem Spülanschluss ausgebildet ist. Dadurch wird eine kompakte und kostengünstige Realisierung des Spülanschlusses ermöglicht, weil die Befestigungseinheit des Spülanschlusses zum Anbringen und Halten der Abdeckung als auch zum Ankoppeln einer Spülfluidleitung ausgebildet ist.

Ferner ist in einer Weiterbildung des vorgestellten Entlüftungsauslasses vorgesehen, dass der Entlüftungsauslass zudem auf seiner Vorderseite eine demontierbare Frontverkleidung umfasst, die im montierten Zustand die an dem Spülanschluss angebrachte Abdeckung gegen ein unbeabsichtigtes Entfernen im oben definierten Sinn, also ein unbeabsichtigtes manuelles Abnehmen oder ein Lösen ohne Fremdeinwirkung, von dem Spülanschluss sichert. Unter dem Begriff der demontierten Frontverkleidung wird verstanden, dass die Frontverkleidung aufgrund einer durch einen Benutzer veranlassten Lageveränderung derzeitig nicht zum Sperren eines Abnehmens der Abdeckung von dem Spülanschluss fähig ist. Der vorgestellte Entlüftungsauslass ist gemäß dieser Weiterbildung dann so ausgestaltet, dass bei demontierter Frontverkleidung die an dem Spülanschluss angebrachte Abdeckung von dem Spülanschluss abgenommen werden kann, um anschließend eine Spülfluidleitung an den Spülanschluss anzukoppeln. Die Frontverkleidung kann werkzeuggebunden und/oder werkzeugungebunden an der Vorderseite des Entlüftungsauslass montiert sein. Unter dem Begriff des Demontierens wird beispielsweise ein Abnehmen der Frontverkleidung von dem Entlüftungsauslass, ein Verdrehen der Frontverkleidung und/oder ein Umklappen der Frontverkleidung verstanden. Die Frontverkleidung und die Abdeckung können so ausgebildet sein, dass ein Verjüngungsabschnitt der an dem Spülanschluss angebrachten Abdeckung in eine Öffnung der montierten Frontverkleidung eingesetzt ist und durch mechanischen Kontakt mit dem Rand der Öffnung fixiert und/oder gesichert wird. Bevorzugt sind die Abdeckung und die Frontverkleidung miteinander fixierbar ausgestaltet, indem die für den wechselseitigen mechanischen Kontakt vorgesehenen jeweiligen Abschnitte der Abdeckung und der Frontverkleidung mit zueinander unterschiedlichen Öffnungsweiten bzw. Durchmessern ausgestaltet sind.

In einer Fortbildung dieser Weiterbildung des vorgestellten Entlüftungsauslasses kann vorgesehen sein, dass die Abdeckung zumindest teilweise in die Frontverkleidung integriert und/oder integrierbar ist. Der Entlüftungsauslass ist dann so ausgestaltet, dass mit dem Demontieren der Frontverkleidung auch das Abnehmen der Abdeckung von dem Spülanschluss erfolgt. Dadurch wird ein einfacher und schneller Zugang zu dem Spülanschluss ermöglicht. Zugleich kann die in die Frontverkleidung integrierte Abdeckung nach dem Abnehmen von dem Spülanschluss besser vor einem Verlust bewahrt werden.

In einer Fortbildung der zuletzt angeführten Fortbildung oder Weiterbildung des vorgestellten Entlüftungsauslasses kann vorgesehen sein, dass die Frontverkleidung ausgebildet ist, um durch die Abdeckung und/oder den Spülanschluss gehalten zu werden. Dazu weist die Frontverkleidung beispielsweise eine Durchgangsöffnung oder Vertiefung auf, die auf die an dem Spülanschluss angebrachte Abdeckung aufgesteckt werden kann. Beispielsweise ist die Frontverkleidung im montierten Zustand durch mindestens eine lösbare Fixierschraube oder eine andere Fixierungseinrichtung fixiert. Nach dem Lösen und Entfernen der Fixierschraube(n) wird die Frontverkleidung gemäß dieser Fortbildung dann weiterhin gehalten, und zwar direkt durch die an dem Spülanschluss angebrachte Abdeckung und indirekt durch den Spülanschluss. Bei einer erneuten Montage der Frontverkleidung kann die Frontverkleidung gemäß dieser Fortbildung zunächst nur von der an dem Spülanschluss angebrachten Abdeckung gehalten werden, so dass die Fixierschraube(n) einfach eingeführt und fixiert werden kann bzw. können.

Ferner ist in einer Weiterbildung des vorgestellten Entlüftungsauslasses vorgesehen, dass an der Vorderseite des Entlüftungsauslasses, insbesondere in der Frontverkleidung, eine Leckage-Anzeige bereitgestellt ist. Die Leckage-Anzeige ist ausgebildet zum Anzeigen, dass eine Leckage von Trinkwasser in das Entlüftungsssystem erfolgt ist, beispielsweise aufgrund eines an den vorgestellten Entlüftungsauslass gekoppelten defekten Entlüftungsventils. Im Fall einer derartigen Leckage enthält das dem Entlüftungsauslass zugeführte Entlüftungsfluid nicht nur Luft sondern auch Wasser. Die Leckage-Anzeige kann durch eine Alarmeinheit, beispielweise ein blinkendes Lämpchen, zum Signalisieren einer Leckage ausgebildet sein, die mit einem Sensor zum Erfassen von Wasser in dem Entlüftungsfluid gekoppelt ist. Als eine besonders einfache Ausgestaltung kann die Leckage-Anzeige durch die an der Vorderseite des Entlüftungsauslasses angeordnete Entlüftungsöffnung in Verbindung mit einem Schriftzug verkörpert sein. Im Falle einer Leckage tritt Wasser an der Vorderseite des Entlüftungsauslasses aus. Der Schriftzug ist so ausgebildet, dass das Kabinenbesatzungs - und/oder Wartungspersonal an der Vorderseite des Entlüftungsauslasses austretendes und/oder ausgetretenes Wasser und möglicherweise an der Vorderseite des Entlüftungsauslasses anhaftende Rückstände von ausgetretenem Wasserals eine Information über das Vorliegen einer Leckage auffasst.

Die Aufgabe der vorliegenden Erfindung wird zudem durch ein Wandelement für eine Bordküche, insbesondere für ein Luftfahrzeug, und auch durch eine Bordküche mit einem derartigen Wandelement gelöst. Das Wandelement umfasst einen Entlüftungsauslass gemäß einer der oben beschriebenen Ausgestaltungen, Weiterbildungen, Fortbildungen und beliebigen Kombinationen von Merkmalen eines erfindungsgemäßen Entlüftungsauslasses. Das Wandelement ist für eine derartige Montage in der Bordküche ausgebildet und vorgesehen ist, dass die Vorderseite des Entlüftungsauslasses für einen Benutzer der Bordküche, insbesondere Kabinenbesatzungspersonal, direkt erreichbar und bevorzugt sichtbar angeordnet ist. Das Wandelement bildet bevorzugt im montierten Zustand, also bei seiner Verwendung in einer Bordküche, eine Wandfläche der Bordküche. Das Wandelement ist bevorzugt für eine Montage in einer Bordküche benachbart zu einer Verbrauchsstelle des Trinkwasserversorgungssystems, wie einem Dampfofen oder einem Getränkezubereitungsapparat, ausgebildet oder bildet im montierten Zustand einen Teil einer Verbrauchsstelle.

Da der zum Spülen des Trinkwasserversorgungssystems nutzbare Entlüftungsauslass direkt erreichbar, zugänglich und sichtbar in der Bordküche angeordnet ist, kann Wartungspersonal schnell und einfach das Trinkwasserversorgungssystem, insbesondere dessen mit dem Entlüftungsauslass gekoppelten Entlüftungsventile, spülen. Ein mühsamer Zugang zu im normalen Betrieb der Bordküche verborgenen Wartungseinrichtungen des Trinkwasserversorgungssystems entfällt. Durch die gute Sichtbarkeit der Entlüftungsöffnung des Entlüftungsauslasses kann zudem das Bordkabinenpersonal schnell eine Leckage eines Entlüftungsventils des Trinkwasserversorgungssystems feststellen, so dass die Betriebssicherheit erhöht wird.

Ferner ist in einer Weiterbildung des Wandelements bzw. der Bordküche vorgesehen, dass das Wandelement für eine derartige Montage in der Bordküche ausgebildet und vorgesehen ist, dass es benachbart zu einem Spülbecken der Bordküche angeordnet ist und/oder das Spülbecken zumindest teilweise ausbildet, und dass der Entlüftungsauslass über, an und/oder in dem Spülbecken der Bordküche angeordnet ist zum Auffangen einer an der Vorderseite des Entlüftungsauslasses austretenden Flüssigkeit in dem Spülbecken. Da im Fall einer Leckage eines Entlüftungsventils des Trinkwasserversorgungssystems aus dem Entlüftungsauslass austretendes Wasser automatisch über das Spülbecken abgeführt wird, wird die Betriebssicherheit erhöht.

Die Aufgabe der Erfindung wird auch durch ein vorgestelltes Verfahren zum Spülen eines Trinkwasserversorgungssystems, das mit mindestens einem Entlüftungsventil versehen ist, eines Luftfahrzeugs gelöst. Das Verfahren ist ausgerichtet auf ein Trinkwasserversorgungssystem, das einen Entlüftungsauslass gemäß einer der oben beschriebenen Ausgestaltungen, Weiterbildungen, Fortbildungen und beliebigen Kombinationen von Merkmalen umfasst, wobei die Einlassöffnung des Entlüftungsauslasses mit mindestens einem Entlüftungsventil des Trinkwasserversorgungssystem zum Empfangen eines Entlüftungsfluids gekoppelt ist. Der Entlüftungsauslass ist bevorzugt in einer Bordküche des Luftfahrzeugs angeordnet.

In dem vorgestellten Spülverfahren wird zunächst die Abdeckung des Entlüftungsauslasses von dem Spülanschluss des Entlüftungsauslasses entfernt. Weist der Entlüftungsauslass eine Frontverkleidung gemäß einer der oben vorgestellten Weiterbildungen auf, so kann vor dem letztgenannten Schritt zunächst die Frontverkleidung so demontiert werden, dass die Abdeckung von dem Spülanschluss abnehmbar wird. Anschließend wird eine Spülfluidleitung an den Spülanschluss auf einer Vorderseite des Entlüftungsauslasses angekoppelt. Dann wird ein Spülfluid, insbesondere Trinkwasser, von der angekoppelten Spülfluidleitung in den Spülanschluss eingebracht und über die Einlassöffnung des Entlüftungsauslasses zu dem mindestens einen Entlüftungsventil befördert. Das vorgestellte Verfahren ermöglicht eine einfache und schnelle Spülung eines Trinkwasserversorgungssystems, insbesondere dessen Entlüftungsventil, eines Luftfahrzeugs.

Nach dem Spülen mit dem Spülfluid kann das vorgestellte Verfahren umfassen, dass zur Trocknung und/oder Konservierung des gereinigten und gespülten Trinkwasserversorgungssystems ein Trocknungsfluid, insbesondere Luft oder ein anderes Gas, in das Trinkwasserversorgungssystem, insbesondere in dessen Trinkwasser-Versorgungsleitungen und in dessen Entlüftungsventil(e), eingebracht wird. Dieses Einbringen erfolgt bevorzugt zum Teil oder vollständig über den Spülanschluss des vorgestellten Entlüftungsausasses. Das Einbringen des Trocknungsfluids kann zum Beispiel in Form eines Einblasens von Luft in den Spülanschluss erfolgen.

In einer Weiterbildung des vorgestellten Verfahrens ist zudem vorgesehen, dass Wartungspersonal zum Durchführen der Verfahrensschritte nur von der Vorderseite des Entlüftungsauslasses auf die Abdeckung und den Spülanschluss zugreift.

Ferner ist in einer Weiterbildung des vorgestellten Verfahrens vorgesehen, dass die Schritte des Verfahrens in einem für einen Benutzer der Bordküche direkt zugänglichen Bereich der Bordküche durchgeführt werden. Unter einem direkt zugänglichen Bereich der Bordküche wird ein Bereich verstanden, der ohne Umbauten und/oder Öffnen von Türen, abgesehen von einem Demontieren einer möglicherweise vorhandenen Frontverkleidung des Entlüftungsauslasses, zum Durchführen der Verfahrensschritte zugänglich bzw. erreichbar ist.

Die Erfindung umfasst beliebige Kombinationen der oben vorgestellten Weiterbildungen.

### Kurze Beschreibung der Zeichnungen

Zur Verdeutlichung des vorgeschlagenen Entlüftungsauslasses, des Wandelements und des Spülverfahrens werden nun Ausführungsbeispiele mit Verweis auf die folgenden Figuren vorgestellt.
- Fig. 1: veranschaulicht ein Ausführungsbeispiel des vorgestellten Entlüftungsauslasses in perspektivischer Ansicht.
- Fig. 2: zeigt eine Draufsicht auf das in Fig. 1 perspektivisch veranschaulichte Ausführungsbeispiel des vorgestellten Entlüftungsauslasses.
- Fig. 3: zeigt eine Ansicht einer Vorderseite eines Ausführungsbeispiels eines vorgestellten Wandelements mit einem darin aufgenommenen Ausführungsbeispiel des vorgestellten Entlüftungsauslasses.
- Fig. 4: zeigt einen vergrößerten Ausschnitt eines Querschnitts entlang der Linie A-A des in Fig. 3 gezeigten Wandelements mit dem darin aufgenommenen Entlüftungsauslass.
- Fig. 5: zeigt ausschnittartig eine Vorderansicht des in Fig. 3 und Fig. 4 veranschaulichten Wandelements und des für den normalen Entlüftungsbetrieb konfigurierten Entlüftungsauslasses.
- Fig.6: zeigt ausschnittartig eine Vorderansicht des in Fig. 3 und Fig. 4 veranschaulichten Wandelements und des für den Spülbetrieb konfigurierten Entlüftungsauslasses mit an diesem angekoppelter Spülfluidleitung.
- Fig. 7: veranschaulicht ein Ausführungsbeispiel des vorgestellten Entlüftungsauslasses in einer perspektivischen Explosionsansicht.
- Fig. 8: zeigt den Entlüftungsauslass von Fig. 7 in einer Draufsicht (linke Hälfte) und im Querschnitt (rechte Hälfte).
- Fig. 9: zeigt eine perspektivische Ansicht einer als Kappe ausgebildeten Abdeckung eines Ausführungsbeispiels des vorgestellten Entlüftungsauslasses.
- Fig. 10: zeigt eine Vorderansicht der in Fig. 9 gezeigten Abdeckung.
- Fig. 11: zeigt eine Querschnittansicht entlang der Linie A-A der in Fig. 9 und Fig. 10 gezeigten Abdeckung.
- Fig. 12: zeigt einen Ausschnitt eines technisch vereinfacht dargestellten Trinkwasserversorgungssystems für ein Luftfahrzeug mit einem Ausführungsbeispiel des vorgestellten Entlüftungsauslasses, der in einer Bordküche mit einem Spülbecken angeordnet ist.

In den aufgeführten Figuren sind identische oder ähnliche Komponenten figurenübergreifend mit denselben Bezugszeichen bezeichnet.

### Ausführungsbeispiele der Erfindung

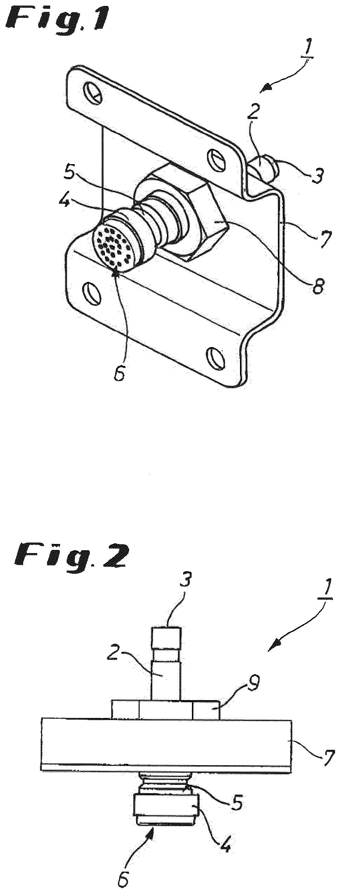

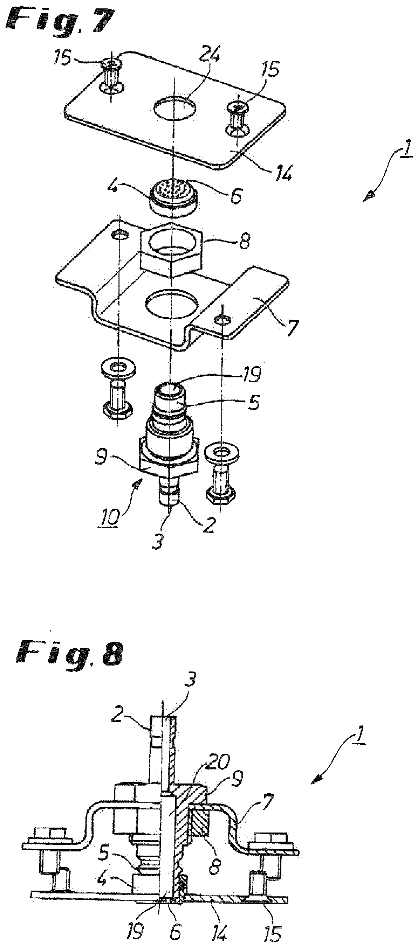

In Fig. 1 ist ein Ausführungsbeispiel des vorgestellten Entlüftungsauslasses in perspektivischer Ansicht veranschaulicht. Der Entlüftungsauslass 1 weist an seiner Rückseite einen rohrartig ausgebildeten Einlassabschnitt 2 mit einer offenen Einlassöffnung 3 auf. Der Einlassabschnitt 2 ist zum Ankoppeln einer (nicht gezeigten) Entlüftungsleitung und zum Empfangen eines von der Entlüftungsleitung gelieferten Entlüftungsfluids ausgebildet. Auf der Vorderseite des Entlüftungsauslasses 1 ist ein Spülanschluss 5 ausgebildet. An dem vorderseitigen Ende des Spülanschlusses 5 ist eine Abdeckung 4 so angebracht bzw. aufgesetzt, dass zumindest ein Teil des zur Ankopplung einer Spülfluidleitung vorgesehenen Abschnitts des Spülanschlusses 5 durch die Abdeckung 4 bedeckt bzw. versperrt wird. Die Abdeckung 4 weist eine Entlüftungsöffnung 6 auf, die durch eine Mehrzahl von Durchgangslöchern mit einem jeweiligen Durchmesser von 0,8 Millimeter gebildet ist. Der Entlüftungsauslass 1 weist zudem ein U-förmig gebogenes Halteblech 7 mit abwinkelten Endschenkeln auf, in das zur Montage des Entlüftungsauslasses 1 ein Grundkörper 10 (siehe Fig. 7) des Entlüftungsauslasses rückseitig eingeführt worden ist. Der Grundkörper 10 ist an dem Halteblech 7 durch eine von der Vorderseite des Entlüftungsauslasses auf dem Grundkörper 10 montierte Mutter 8 fixiert.

Fig. 2 zeigt eine Draufsicht auf den in Fig. 1 perspektivisch veranschaulichten Entlüftungsauslass 1. Wie aus Fig. 2 ersichtlich, bildet auf der von der Mutter 8 abgewandten Seite ein mutternartiger Sechskantvorsprung 9 des Grundkörpers 10 ein Gegenlager zum Fixieren des Halteblechs 7.

Der in Fig. 1 und Fig. 2 veranschaulichte Entlüftungsauslass 1 ist zum Durchleiten eines an der Einlassöffnung 3 bereitgestellten Entlüftungsfluid durch einen in dem Grundkörper 10 bereitgestellten Strömungskanal, der als ein Durchgangsloch mit unterschiedlichem Innendurchmesser ausgestaltet ist, zu der Entlüftungsöffnung 6 ausgebildet. Bei von dem Spülanschluss 5 abgenommener Abdeckung 4 kann eine Spülfluidleitung an den Spülanschluss 5 angekoppelt werden, und ein Spülfluid kann durch den in dem Grundkörper 10 bereitgestellten Strömungskanal von dem Spülanschluss 5 bis zu der Einlassöffnung 3 befördert werden.

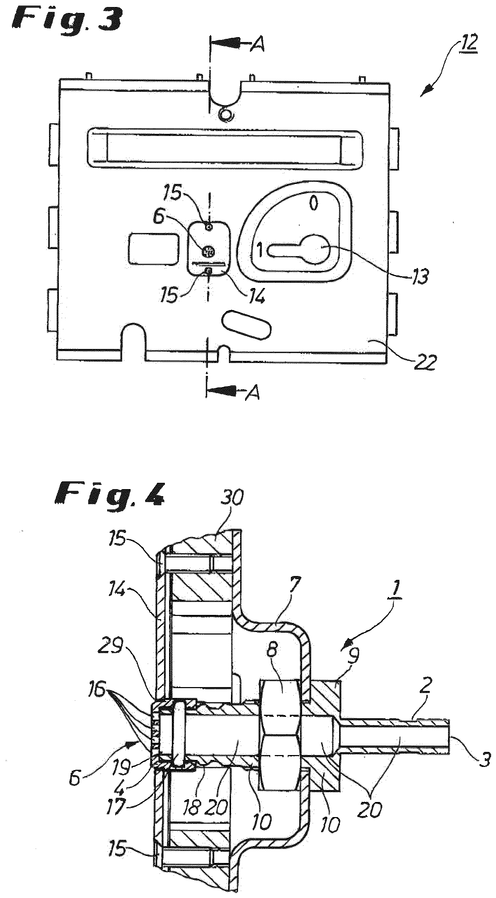

Fig. 3 zeigt eine Ansicht einer Vorderseite eines Ausführungsbeispiels eines vorgestellten Wandelements mit einem darin aufgenommenen Ausführungsbeispiel des vorgestellten Entlüftungsauslasses. Das in Fig. 3 veranschaulichte Wandelement 12 ist beispielsweise zur Montage oberhalb eines Spülbeckens in einer Bordküche eines Luftfahrzeugs vorgesehen. In einer Wandverkleidung 22 des Wandelements 12 sind ein Trinkwasser-Absperrschalter 13 und ein Ausführungsbeispiel des vorgestellten Entlüftungsauslasses integriert. Der Entlüftungsauslass ist grundsätzlich identisch zu dem in Fig. 1 und Fig. 2 veranschaulichten Entlüftungsauslass ausgebildet, weist aber zusätzlich an seiner Vorderseite eine Frontverkleidung 14 auf, die durch Fixierschrauben 15 an der Wandverkleidung 22 fixiert ist.

Fig. 4 zeigt einen vergrößerten Ausschnitt eines Querschnitts entlang der Linie A-A des in Fig. 3 gezeigten Wandelements mit dem darin aufgenommenen Entlüftungsauslass. Der in Fig. 4 gezeigte Entlüftungsauslass 1 umfasst einen bevorzugt einstückig ausgebildeten Grundkörper 10, in dem sich ein Strömungskanal 20 von der Einlassöffnung 3 bis zu einer Einspeisungsöffnung 19 des Spülanschlusses 5 erstreckt.

Fig. 4 zeigt den Entlüftungsauslass 1 in der Konfiguration für den normalen Entlüftungsbetrieb, also nicht für den Spülbetrieb. An dem Spülanschluss 5 ist an dessen Außenumfang eine als perforierte Kappe ausgebildete Abdeckung 4 angebracht. In dem Innenumfang der Abdeckung 4 ist ein elastischer Ring 17 eingelassen, der als eine oben vorgestellte Sicherungseinheit gegen ein unbeabsichtigtes Entfernen der an dem Spülanschluss 5 angebrachten Abdeckung 4 ausgebildet ist. Die Abdeckung 4 ist mit mehreren Durchgangslöchern 16 mit einem jeweiligen maximalen Durchmesser von 0,8 Millimeter versehen, durch welche die Entlüftungsöffnung 6 auf der Vorderseite des Entlüftungsauslasses 1 gebildet ist. Ein an der Einlassöffnung 3 bereitgestelltes Entlüftungsfluid kann durch den Strömungskanal 20 und durch die Durchgangslöcher 16 der Abdeckung 4 an der Entlüftungsöffnung 6 auf der Vorderseite des Entlüftungsauslasses 1 austreten.

Auf der Vorderseite des Entlüftungsauslasses 1 ist eine Frontverkleidung bzw. Frontabdeckung 14 montiert, die durch zwei in einen Wandabschnitt 30 des Wandelements 12 eindrehte Fixierschrauben 15 fixiert ist. Die Frontverkleidung 14 weist eine Öffnung 24 auf, durch welche die Abdeckung 4 mit ihrem vorderseitigen Abschnitt auf die Vorderseite des Entlüftungsauslasses 1 durchtritt. Da die Abdeckung 4 eine Verjüngung an ihrem vorderseitigen Ende bzw. eine Verdickung an ihrem der Rückseite des Entlüftungsauslasses zugewandten Ende aufweist, sichert die fixierte Frontverkleidung 14 die Abdeckung 4 gegen ein unbeabsichtigtes Entfernen von dem Spülanschluss 5. Zwischen dem Rand der Öffnung 24 der Frontverkleidung 14 kann entweder ein Luftspalt zu dem Außenumfang der Abdeckung 4 vorgesehen sein, oder die Abdeckung 4 ist in die Öffnung der Frontverkleidung 14 eingepasst bzw. in der Öffnung aufgenommen. Das in Fig. 4 veranschaulichte Ausführungsbeispiel des vorgestellten Entlüftungsauslasses ist so ausgestaltet, dass die Frontverkleidung 14 auf die an dem Spülanschluss 5 angebrachte Abdeckung 4 aufsteckbar ist und durch die Abdeckung 4 provisorisch bis zur Fixierung durch Eindrehen der Fixierschrauben gehalten werden kann.

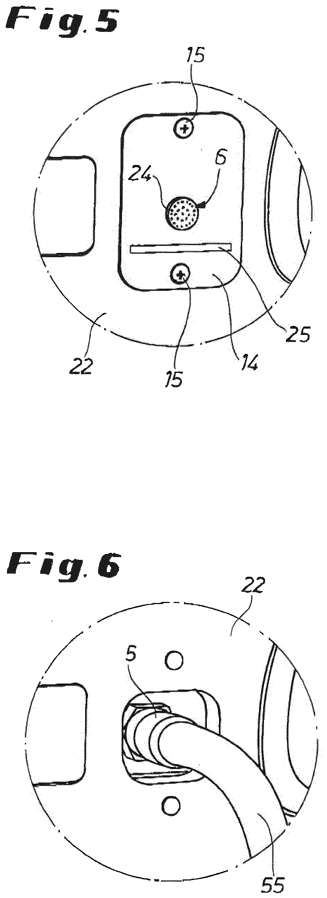

Fig. 5 zeigt ausschnittartig eine Vorderansicht des in Fig. 3 und Fig. 4 veranschaulichten Wandelements und des für den normalen Entlüftungsbetrieb konfigurierten Entlüftungsauslasses. Die Frontverkleidung 14 ist durch zwei Fixierschrauben 15 an der Wandverkleidung 22 fixiert. Ein die Entlüftungsöffnung 6 umfassender vorderseitiger Abschnitt der als perforierte Kappe ausgestalteten Abdeckung 4, die auf dem Außenumfang des in Fig. 5 nicht sichtbaren Spülanschlusses 5 angebracht ist, erstreckt sich durch die Öffnung 24 der Frontverkleidung 14 auf die Vorderseite des Entlüftungsauslasses 1.

Das in Fig. 5 gezeigte Ausführungsbeispiel des vorgestellten Entlüftungsauslasses 1 weist außerdem eine Leckage-Anzeige für den normalen Entlüftungsbetrieb auf, die durch einen auf eine Leckage hinweisenden Schriftzug 25 unterhalb der Entlüftungsöffnung 6 ausgebildet ist.

Damit der in Fig. 4 beispielhaft gezeigte Entlüftungsauslass 1 in der Konfiguration für den Spülbetrieb, also nicht für den normalen Entlüftungsbetrieb, ausgestaltet ist, müssen, wie in Fig. 6 gezeigt, die Frontverkleidung 14 von der Wandverkleidung 22 demontiert und die Abdeckung 4 von dem Spülanschluss 5 abgenommen sein. Zur Durchführung des Spülbetriebs kann dann an den auf der Vorderseite des Entlüftungsauslasses 1 zugänglichen Spülanschluss 5 eine Spülfluidleitung 55 angekoppelt werden. Zur Ankopplung der Spülfluidleitung 55 an den Spülanschluss 5, beispielsweise gemäß der Norm ABS1169 des Flugzeugherstellers Airbus, weist der Spülanschluss 5 an seinem Außenumfang eine Befestigungseinheit 18 auf, die durch eine lokale radiale Erhöhung des Spülanschlusses ausgebildet ist.

Fig. 7 und Fig. 8 veranschaulichen ein weiteres Ausführungsbeispiel des vorgestellten Entlüftungsauslasses in einer perspektivischen Explosionsansicht bzw. in einer Draufsicht (linke Hälfte von Fig. 8) und im Querschnitt (rechte Hälfte von Fig. 8). Im Vergleich zu dem in Fig. 3 und Fig. 4 veranschaulichten Ausführungsbeispiel sind in dem Ausführungsbeispiel von Fig. 7 und Fig. 8 lediglich die Anordnung der Fixierschrauben 15 und die Proportionen der Frontverkleidung 14 geändert.

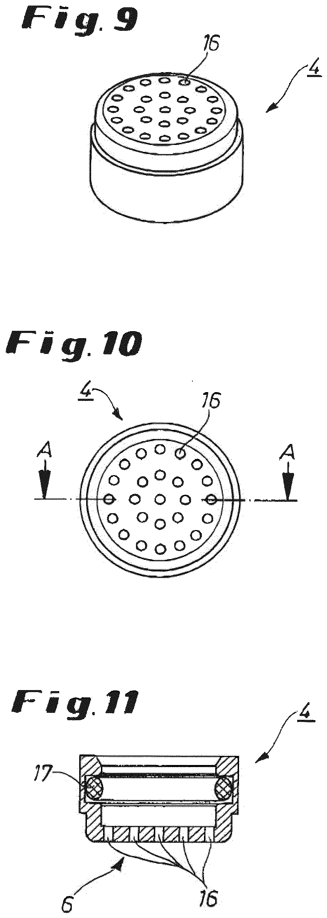

Fig. 9 bis Fig. 11 zeigen Detailansichten einer mit Durchgangslöchern 16 perforierten Abdeckung 4, die in ihrem Innenumfang mit einer Sicherungseinheit 17 versehen ist, die durch einen in dem Innenumfang eingefassten elastischen Ring ausgebildet ist.

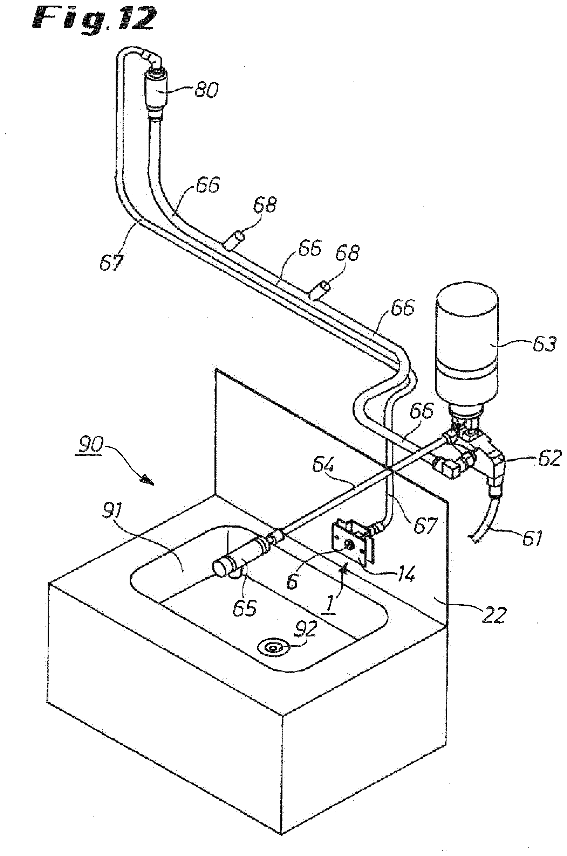

Fig. 12 zeigt einen Ausschnitt eines technisch vereinfacht dargestellten Trinkwasserversorgungssystems für ein Luftfahrzeug mit einem Ausführungsbeispiel des vorgestellten Entlüftungsauslasses, der in einer Bordküche angeordnet ist. Eine Bordküche 90 ist in Fig. 12 beispielhaft ausschnittsweise durch eine Bordküchenkomponente mit einem Spülbecken 91 und eine hintere Wandverkleidung 22 dargestellt. Ein Ausführungsbeispiel des vorgestellten Entlüftungsauslasses 1 ist an der Wandverkleidung 22 so montiert, das die Vorderseite des Entlüftungsauslasses 1 für einen Benutzer der Bordküche direkt sichtbar und zugänglich ist.

In dem in Fig. 12 gezeigten Trinkwasserversorgungssystem ist eine mit einem nicht gezeigten Trinkwasserspeicher gekoppelte Trinkwasserzuleitung 61 mit einem Verteiler 62 gekoppelt. An den Verteiler 62 ist ein Wasserfilter 63 angeschlossen, über den Trinkwasser durch eine Trinkwasser-Versorgungsleitung 64 zu einem selbst-entlüftenden Zapfhahn 65 zum Beziehen von Trinkwasser geführt wird.

Außerdem ist an den Verteiler 62 eine weitere Trinkwasser-Versorgungsleitung 66 des Trinkwasserversorgungssystems angeschlossen, die mit einem Entlüftungsventil 80 des Trinkwasserversorgungssystems gekoppelt ist. An die Trinkwasser-Versorgungsleitung 66 sind über Anschlussstücke bzw. Fittings weitere Verbrauchsstellen des Trinkwasserversorgungssystems angeschlossen. Diese Verbrauchsstellen können beispielsweise Dampföfen oder Getränkezubereitungsapparate sein, die über die Trinkwasser-Versorgungsleitung 66 geliefertes Trinkwasser zur Erzeugung von Dampf bzw. Getränken nutzen. In Fig. 12 sind nur Kopplungen 68 zum Ankoppeln der beispielhaften genannten Verbrauchsstellenvorrichtungen an die Trinkwasser-Versorgungsleitung 66 dargestellt.

An die Eingangsseite des Entlüftungsventils 80 ist die Trinkwasser-Versorgungsleitung 66 angeschlossen. An die Ausgangsseite des Entlüftungsventils 80 ist eine Entlüftungsleitung 67 angeschlossen. Ein in der Trinkwasser-Versorgungsleitung 66 mitgeführtes Entlüftungsfluid, inbesondere Luft, kann durch das Entlüftungsventil 80 über die Entlüftungsleitung 67 zu dem vorgestellten Entlüftungsauslass 1 strömen. Die Entlüftungsleitung 67 kann beispielsweise durch eine AVS-Römer ELSA-Steckverbindung mit dem Einlassabschnitt 2 des Entlüftungsauslasses 1 gekoppelt sein.

Die Vorderseite des Entlüftungsauslasses 1 ist direkt zugänglich bzw. erreichbar und sichtbar in einer hinteren Wandverkleidung 22 der ausschnittsweise gezeigten Bordküche 90 angeordnet. Die Bordküche 90 ist mit einem Spülbecken 91 ausgestattet, das unterhalb des vorgestellten Entlüftungsauslasses 1 angeordnet ist. Im Fall einer Leckage des Entlüftungsventils 80, also wenn das Entlüftungsfluid nicht nur Luft sondern auch Wasser enthält, tritt das über die Entlüftungsleitung 67 zugeführte Wasser durch die Entlüftungsöffnung 6 aus und wird in dem Spülbecken 91 der Bordküche 90 aufgefangen und durch einen in dem Spülbecken vorgesehenen Abfluss 92 abgeführt.

Im Fall einer Bordküche ohne Spülbecken, wenn die Bordküche also beispielsweise nur mit Dampföfen oder Getränkezubereitungsapparaten ausgestattet ist, ist der Entlüftungsauslass 1 in einem direkt sichtbaren und zugänglichen Bereich der Bordküche, bevorzugt benachbart zu einem Dampfofen oder einem Getränkezubereitungsapparat, angeordnet.

### Bezugszeichenliste

- 1: Entlüftungsauslass
- 2: Einlassabschnitt
- 3: Einlassöffnung
- 4: Abdeckung
- 5: Spülanschluss
- 6: Entlüftungsöffnung
- 7: Halteblech
- 8: Mutter
- 9: Sechskantvorsprung
- 10: Grundkörper des Entlüftungsauslasses
- 12: Wandelement
- 13: Trinkwasser-Absperrschalter
- 14: Frontverkleidung
- 15: Fixierschraube
- 16: Entlüftungsöffnung
- 17: Sicherungseinheit
- 18: Befestigungseinheit
- 19: Einspeisungsöffnung
- 20: Strömungskanal
- 22: Wandverkleidung
- 24: Öffnung in Frontverkleidung
- 25: Leckage-Anzeige
- 30: Wandabschnitt
- 55: Spülfluidleitung
- 61: Trinkwasserzuleitung
- 62: Verteiler
- 63: Wasserfilter
- 64: Trinkwasser-Versorgungsleitung
- 65: Zapfhahn
- 66: Trinkwasser-Versorgungsleitung
- 67: Entlüftungsleitung
- 68: Kopplung für Verbrauchsstelle
- 80: Entlüftungsventil
- 90: Bordküche
- 91: Spülbecken
- 92: Abfluss

## Patentansprüche

1. Entlüftungsauslass (1) für ein Trinkwasserversorgungssystem eines Luftfahrzeugs, mit einer auf einer Rückseite des Entlüftungsauslasses angeordneten Einlassöffnung (3) zum Empfangen eines Entlüftungsfluids, insbesondere Luft, von dem Trinkwasserversorgungssystem und mit ferner einer auf einer Vorderseite des Entlüftungsauslasses angeordneten Entlüftungsöffnung (6) zum Ausgeben zumindest eines Teils des empfangenen Entlüftungsfluids an eine äußere Umgebung des Entlüftungsauslasses (1),
**dadurch gekennzeichnet, dass**
der Entlüftungsauslass (1) ferner einen Spülanschluss (5) und eine an dem Spülanschluss (5) anbringbare und von diesem abnehmbare Abdeckung (4) mit mindestens einem Durchgangsloch (16) aufweist, wobei die Entlüftungsöffnung (6) durch das mindestens eine Durchgangsloch (16) der an dem Spülanschluss (5) angebrachten Abdeckung (4) gebildet ist, und der Spülanschluss (5) nur bei von dem Spülanschluss (5) abgenommener Abdeckung (4) ausgebildet ist zum Ankoppeln einer Spülfluidleitung (55) auf der Vorderseite des Entlüftungsauslasses und zum Einbringen eines Spülfluids, insbesondere Trinkwasser, durch den Spülanschluss (5) zu der Einlassöffnung (3) des Entlüftungsauslasses.

2. Entlüftungsauslass (1) nach Anspruch 1, **dadurch gekennzeichnet, dass** die an dem Spülanschluss (5) angebrachte Abdeckung (4) einen für eine Ankopplung der Spülfluidleitung (55) vorgesehenen Kopplungsabschnitt des Spülanschlusses (5) zumindest teilweise bedeckt.

3. Entlüftungsauslass (1) nach Anspruch 1 oder 2, **dadurch gekennzeichnet, dass** die Abdeckung (4) als perforierte Kappe ausgestaltet ist.

4. Entlüftungsauslass (1) nach einem der Ansprüche 1 bis 3, **dadurch gekennzeichnet, dass** das mindestens eine Durchgangsloch (16) der Abdeckung (4) eine maximale Durchgangsbreite und/oder einen maximalen Durchmesser von 0,8 Millimeter aufweist.

5. Entlüftungsauslass (1) nach einem der Ansprüche 1 bis 4, **dadurch gekennzeichnet, dass** die Abdeckung (4) und/oder der Spülanschluss (5) eine Sicherungseinheit (17) gegen ein unbeabsichtigtes Entfernen der an dem Spülanschluss (5) angebrachten Abdeckung (4) von dem Spülanschluss (5) aufweist.

6. Entlüftungsauslass (1)nach einem der Ansprüche 1 bis 5, **dadurch gekennzeichnet, dass** der Spülanschluss (5) eine Befestigungseinheit (18) zum Ankoppeln der Spülfluidleitung (55) durch einen Schnellverschluss und/oder einen Schraubverschluss aufweist.

7. Entlüftungsanschluss (1) nach Anspruch 6, **dadurch gekennzeichnet, dass** die Befestigungseinheit auch als Sicherungseinheit gegen ein unbeabsichtigtes Entfernen der an dem Spülanschluss (5) angebrachten Abdeckung (4) von dem Spülanschluss (5) ausgebildet ist.

8. Entlüftungsauslass (1) nach einem der Ansprüche 1 bis 7, **dadurch gekennzeichnet, dass** der Entlüftungsauslass (1) ferner auf seiner Vorderseite eine demontierbare Frontverkleidung (14) umfasst, die im montierten Zustand die an dem Spülanschluss (5) angebrachte Abdeckung (4) gegen ein Entfernen von dem Spülanschluss (5) sichert.

9. Entlüftungsauslass (1) nach Anspruch 8, **dadurch gekennzeichnet, dass** die Abdeckung (4) zumindest teilweise in die Frontverkleidung (14) integriert und/oder integrierbar ist.

10. Entlüftungsauslass (1) nach Anspruch 8 oder 9, **dadurch gekennzeichnet, dass** die Frontverkleidung (14) ausgebildet ist, um durch die Abdeckung (4) und/oder den Spülanschluss (5) gehalten zu werden.

11. Entlüftungsauslass (1) nach einem der Ansprüche 1 bis 10, **dadurch gekennzeichnet, dass** an der Vorderseite, insbesondere in oder an der Frontverkleidung (14), des Entlüftungsauslasses (1) eine Leckage-Anzeige (6, 25) bereitgestellt ist.

12. Wandelement (12) für eine Bordküche (90), insbesondere für ein Luftfahrzeug, **dadurch gekennzeichnet, dass** das Wandelement (12) einen Entlüftungsauslass (1) nach einem der Ansprüche 1 bis 11 aufweist, und dass das Wandelement (1) für eine derartige Montage in der Bordküche (90) ausgebildet und vorgesehen ist, dass die Vorderseite des Entlüftungsauslasses (1) für einen Benutzer der Bordküche, insbesondere Kabinenbesatzungspersonal, direkt erreichbar und bevorzugt sichtbar angeordnet ist.

13. Wandelement (12) nach Anspruch 12, **dadurch gekennzeichnet, dass** das Wandelement (12) für eine derartige Montage in der Bordküche (90) ausgebildet und vorgesehen ist, dass es benachbart zu einem Spülbecken (91) der Bordküche angeordnet ist und/oder das Spülbecken zumindest teilweise ausbildet, und dass der Entlüftungsauslass (1) über, an und/oder in dem Spülbecken (91) der Bordküche (90) angeordnet ist zum Auffangen einer an der Vorderseite des Entlüftungsauslasses (1) austretenden Flüssigkeit in dem Spülbecken (91).

14. Verfahren zum Spülen eines Trinkwasserversorgungssystems eines Luftfahrzeugs, wobei das Trinkwasserversorgungssystem einen insbesondere in einer Bordküche (90) des Luftfahrzeugs angeordneten Entlüftungsauslass (1) nach einem der Ansprüche 1 bis 11 umfasst, und die Einlassöffnung (3) des Entlüftungs-auslasses (1) mit mindestens einem Entlüftungsventil (80) des Trinkwasserversorgungssystems zum Empfangen eines Entlüftungsfluids gekoppelt ist, **gekennzeichnet durch** die folgenden Schritte:
- Entfernen der Abdeckung (4) des Entlüftungsauslasses (1) von dem Spülanschluss (5) des Entlüftungsauslasses (1);
- Ankoppeln einer Spülfluidleitung (55) an den Spülanschluss (5) auf einer Vorderseite des Entlüftungsauslasses (1); und
- Einbringen eines Spülfluids, insbesondere Trinkwasser, von der angekoppelten Spülfluidleitung (55) in den Spülanschluss (5) über die Einlassöffnung (3) des Entlüftungsauslasses zu dem mindestens einen Entlüftungsventil (80).

15. Verfahren nach Anspruch 14, **dadurch gekennzeichnet, dass** Wartungspersonal zum Durchführen der Schritte des Verfahrens nur von der Vorderseite des Entlüftungsauslasses auf die Abdeckung (4) und den Spülanschluss (5) zugreift.

16. Verfahren nach Anspruch 14 oder 15, **dadurch gekennzeichnet, dass** die Schritte des Verfahrens in einem für einen Benutzer der Bordküche (90) direkt zugänglichen Bereich der Bordküche durchgeführt werden.

## Claims

1. A venting outlet (1) for a drinking water supply system of an aircraft, having an inlet opening (3) which is situated on a rear side of the venting outlet and is intended for receiving a venting fluid, in particular air, from the drinking water supply system, and further having a venting opening (6) which is situated on a front side of the venting outlet and is intended for discharging at least some of the received venting fluid to the external surroundings of the venting outlet (1),
**characterised in that**
the venting outlet (1) also has a flushing connection (5) and a cover (4) which can be attached to the flushing connection (5) and removed therefrom and which has at least one through-hole (16), wherein the venting opening (6) is formed by the at least one through-hole (16) in the cover (4) attached to the flushing connection (5), and the flushing connection (5) is designed to couple a flushing fluid line (55) to the front side of the venting outlet and to introduce a flushing fluid, in particular drinking water, through the flushing connection (5) to the inlet opening (3) of the venting outlet, only when the cover (4) is removed from the flushing connection (5).

2. The venting outlet (1) according to Claim 1,
**characterised in that**
the cover (4) attached to the flushing connection (5) at least partially covers a coupling section of the flushing connection (5) provided for coupling the flushing fluid line (55).

3. The venting outlet (1) according to Claim 1 or 2,
**characterised in that**
the cover (4) is in the form of a perforated cap.

4. The venting outlet (1) according to any one of Claims 1 to 3,
**characterised in that**
the at least one through-hole (16) in the cover (4) has a maximum clearance width and/or a maximum diameter of 0.8 millimetres.

5. The venting outlet (1) according to any one of Claims 1 to 4,
**characterised in that**
the cover (4) and/or the flushing connection (5) has a securing unit (17) to prevent the cover (4) attached to the flushing connection (5) being inadvertently removed from the flushing connection (5).

6. The venting outlet (1) according to any one of Claims 1 to 5,
**characterised in that**
the flushing connection (5) has a fastening unit (18) for coupling the flushing fluid line (55) by means of a quick-release fastener and/or a screw closure.

7. The venting connection (1) according to Claim 6,
**characterised in that**
the fastening unit is also in the form of a securing unit to prevent the cover (4) attached to the flushing connection (5) being inadvertently removed from the flushing connection (5).

8. The venting outlet (1) according to any one of Claims 1 to 7,
**characterised in that**
the venting outlet (1) also comprises on the front side thereof a removable front panel (14) which, when in the mounted state, secures the cover (4) attached to the flushing connection (5) to prevent removal from the flushing connection (5).

9. The venting outlet (1) according to Claim 8,
**characterised in that**
the cover (4) is integrated and/or can be integrated at least partially in the front panel (14).

10. The venting outlet (1) according to Claim 8 or 9,
**characterised in that**
the front panel (14) is designed to be retained by the cover (4) and/or the flushing connection (5).

11. The venting outlet (1) according to any one of Claims 1 to 10,
**characterised in that**
a leak indicator (6, 25) is provided on the front side, in particular in or on the front panel (14), of the venting outlet (1).

12. A wall element (12) for a galley (90), in particular for an aircraft,
**characterised in that**
the wall element (12) has a venting outlet (1) according to any one of Claims 1 to 11, and the wall element (1) is designed and provided for installation in the galley (90) such that the front side of the venting outlet (1) is arranged to be directly accessible and preferably visible to a user of the galley, in particular cabin crew staff.

13. The wall element (12) according to Claim 12,
**characterised in that**
the wall element (12) is designed and provided for installation in the galley (90) such that it is arranged adjacently to a sink (91) of the galley and/or at least partially forms the sink, and the venting outlet (1) is arranged above, on and/or in the sink (91) of the galley (90) to catch a liquid exiting from the front side of the venting outlet (1) in the sink (91).

14. A method for flushing a drinking water supply system of an aircraft, the drinking water supply system comprising a venting outlet (1) according to any one of Claims 1 to 11, in particular arranged in a galley (90) of the aircraft, and the inlet opening (3) of the venting outlet (1) being coupled to at least one venting valve (80) of the drinking water supply system to receive a venting fluid, **characterised by** the following steps:
- removing the cover (4) of the venting outlet (1) from the flushing connection (5) of the venting outlet (1);
- coupling a flushing fluid line (55) to the flushing connection (5) on a front side of the venting outlet (1); and
- introducing a flushing fluid, in particular drinking water, from the coupled flushing fluid line (55) into the flushing connection (5) via the inlet opening (3) of the venting outlet to the at least one venting valve (80).

15. The method according to Claim 14,
**characterised in that**
to carry out the steps of the method, maintenance staff only access the cover (4) and the flushing connection (5) from the front side of the venting outlet.

16. The method according to Claim 14 or 15,
**characterised in that**
the steps of the method are carried out in a region of the galley which is directly accessible to a user of the galley (90).

## Revendications

1. Ensemble de sortie de ventilation (1) pour un système d'alimentation en eau potable d'un aéronef, avec une ouverture d'entrée (3) disposée sur une face arrière de l'ensemble de sortie de ventilation, destinée à recevoir un fluide de ventilation, notamment d'air, du système d'alimentation d'eau potable et avec en plus une ouverture de ventilation (6) disposée sur une face avant de l'ensemble de sortie de ventilation, destinée à délivrer au moins une partie du fluide de ventilation reçu à un environnement extérieur de l'ensemble de sortie de ventilation (1),
**caractérisée en ce que**
l'ensemble de sortie de ventilation (1) comporte en plus un raccord de rinçage (5) et une bague de couverture (4) pouvant être montée sur le raccord de rinçage (5) et séparée de celui-ci avec au moins un trou de passage (16), sachant que l'ouverture de ventilation (6) est formée par au moins un trou de passage (16) de la bague de couverture (4) montée sur le raccord de rinçage (5) et le raccord de rinçage (5) n'est constitué qu'avec la bague de couverture (4) enlevée du raccord de rinçage (5) pour coupler une conduite de fluide de rinçage (55) sur la face avant de l'ensemble de sortie de ventilation et pour introduire un fluide de rinçage, notamment de l'eau potable, par le raccord de rinçage (5) vers l'ouverture d'entrée (3) de l'ensemble de sortie de ventilation.

2. Ensemble de sortie de ventilation (1) selon la revendication 1, **caractérisée en ce que** la bague de couverture (4) montée sur le raccord de rinçage (5) couvre au moins en partie une section de couplage du raccord de rinçage (5), prévue pour un accouplement de la conduite de fluide de rinçage (55).

3. Ensemble de sortie de ventilation (1) selon la revendication 1 ou 2, **caractérisée en ce que** la bague de couverture (4) est constituée comme un bouchon perforé.

4. Ensemble de sortie de ventilation (1) selon l'une quelconque des revendications 1 à 3, **caractérisée en ce qu'**au moins un trou de passage (16) de la bague de couverture (4) comporte une largeur de passage maximale et/ou un diamètre maximal de 0,8 millimètre.

5. Ensemble de sortie de ventilation (1) selon l'une quelconque des revendications 1 à 4, **caractérisée en ce que** la bague de couverture (4) et/ou le raccord de rinçage (5) comporte une unité de sécurisation (17) contre toute séparation involontaire de la bague de couverture (4) montée sur le raccord de rinçage (5) du raccord de rinçage (5).

6. Ensemble de sortie de ventilation (1) selon l'une quelconque des revendications 1 à 5, **caractérisée en ce que** le raccord de rinçage (5) comporte une unité de fixation (18) pour coupler la conduite de fluide de rinçage (55) par un raccord rapide et/ou une fermeture à vis.

7. Ensemble de sortie de ventilation (1) selon la revendication 6, **caractérisée en ce que** l'unité de fixation est également constituée comme unité de sécurisation contre toute séparation involontaire de la bague de couverture (4) montée sur le raccord de rinçage (5) du raccord de rinçage (5).

8. Ensemble de sortie de ventilation (1) selon l'une quelconque des revendication 1 à 7, **caractérisée en ce que** l'ensemble de sortie de ventilation (1) comprend en plus un habillage frontal (14) démontable sur sa face avant, qui sécurise à l'état monté la bague de couverture (4) montée sur le raccord de rinçage (5) contre toute séparation du raccord de rinçage (5).

9. Ensemble de sortie de ventilation (1) selon la revendication 8, **caractérisée en ce que** la bague de couverture (4) est intégrée et/ou peut être intégrée au moins en partie dans l'habillage frontal (14).

10. Ensemble de sortie de ventilation (1) selon la revendication 8 ou 9, **caractérisée en ce que** l'habillage frontal (14) est constitué pour être maintenu par la bague de couverture (4) et/ou le raccord de rinçage (5) .

11. Ensemble de sortie de ventilation (1) selon l'une quelconque des revendications 1 à 10, **caractérisée en ce qu'**une indication de fuite (6, 25) est fournie sur la face avant, notamment dans ou sur l'habillage frontal (14) de l'ensemble de sortie de ventilation (1).

12. Elément de paroi (12) pour une cuisine de bord (90), notamment pour un aéronef, **caractérisé en ce que** l'élément de paroi (12) comporte un ensemble de sortie de ventilation (1) selon l'une quelconque des revendications 1 à 11 et **en ce que** l'élément de paroi (1) est constitué et prévu pour un montage de ce type dans la cuisine de bord (90), **en ce que** la face avant de l'ensemble de sortie de ventilation (1) est disposée directement accessible et de préférence visible pour un utilisateur de la cuisine de bord, notamment pour le personnel de l'équipage de cabine.

13. Elément de paroi (12) selon la revendication 12, **caractérisée en ce que** l'élément de paroi (12) est constitué et prévu pour un montage de ce type dans la cuisine de bord (90), **en ce qu'**il est disposé adjacent à un bac de rinçage (91) de la cuisine de bord (90) et/ou forme au moins en partie le bac de rinçage et **en ce que** l'ensemble de sortie de ventilation (1) est disposé au-dessus, sur et/ou dans le bac de rinçage (91) de la cuisine de bord (90) pour recueillir un liquide dans le bac de rinçage (91) sortant sur la face avant de l'ensemble de sortie de ventilation (1).

14. Procédé destiné au rinçage d'un système d'alimentation d'eau potable d'un aéronef, sachant que le système d'alimentation d'eau potable comprend un ensemble de sortie de ventilation (1) disposé notamment dans une cuisine de bord (90) de l'aéronef selon l'une quelconque des revendications 1 à 11 et l'ouverture d'entrée (3) de l'ensemble de sortie de ventilation (1) est couplée à au moins un soupape de purge (80) du système d'alimentation d'eau potable pour recevoir un fluide de ventilation, **caractérisé par** les étapes suivantes :
- enlèvement de la bague de couverture (4) de l'ensemble de sortie de ventilation (1) du raccord de rinçage (5) de l'ensemble de sortie de ventilation (1),
- couplage d'une conduite de fluide de rinçage (55) à un raccord de rinçage (5) sur une face avant de l'ensemble de sortie de ventilation (1), et
- introduction d'un fluide de rinçage, notamment d'eau potable, de la conduite de fluide de rinçage couplée (55) dans le raccord de rinçage (5) par le biais de l'ouverture d'entrée (3) de l'ensemble de sortie de ventilation vers au moins une soupape de purge (80).

15. Procédé selon la revendication 14 **caractérisé en ce que** le personnel de maintenance n'accède que par la face avant de l'ensemble de sortie de ventilation à la bague de couverture (4) et au raccord de rinçage (5) pour effectuer les étapes du procédé.

16. Procédé selon la revendication 14 ou 15, **caractérisé en ce que** les étapes du procédé sont exécutées dans une zone de la cuisine de bord directement accessible pour un utilisateur de la cuisine de bord (90).
